# EUROPÄISCHE PATENTSCHRIFT

(11) **EP 0 836 561 B1**
(45) Veröffentlichungstag und Bekanntmachung des Hinweises auf die Patenterteilung: **05.04.2000**
(21) Anmeldenummer: 96927589.0
(22) Anmeldetag: 24.07.1996
(51) Int. Cl.: B60P 3/22, B65D 90/02

(54) **TANK- ODER SILOBEHÄLTER AUS FASERVERSTÄRKTEN KUNSTSTOFFEN**
TANK OR SILO VESSEL MADE OF FIBRE-REINFORCED PLASTIC
CITERNE OU SILO EN MATIERE PLASTIQUE RENFORCEE PAR FIBRES

(30) Priorität: 27.07.1995 DE 29512117 U
(43) Veröffentlichungstag der Anmeldung: 22.04.1998
(73) Patentinhaber: Apparate- Und Chemieanlagenbau GmbH, 06896 Wittenberg (DE)
(72) Erfinder: BECKMANN, Jan-Dirk, D-21423 Winsen (DE); FELDBINDER, Otto, D-29643 Neuenkirchen (DE)
(74) Vertreter: Gerbaulet, Hannes
(86) Internationale Anmeldenummer: EP9603255
(87) Internationale Veröffentlichungsnummer: WO9704987

(56) Entgegenhaltungen:
- WO-A-83/01924
- DE-A- 2 448 875
- GB-A- 1 193 279
- US-A- 3 083 864
- US-A- 3 335 904
- US-A- 3 854 620
- US-A- 4 123 307
- US-A- 4 783 232

## Beschreibung

Der erfindungsgemäße Tank- oder Silobehälter ist überall dort einsetzbar, wo ein solcher Behälter verwendet werden soll, der bei gleichem oder geringerem Gewicht gegenüber Behältern gemäß dem Stand der Technik eine höhere Festigkeit, insbesondere bei thermischen Belastungen aufweist.

Die Erfindung betrifft Tank- oder Silobehälter, insbesondere für Fahrzeuge zur Aufnahme von flüssigen oder fließfähigen Gütern, deren langgestrecktes Hauptteil einen kreis-, ellipsenförmigen Querschnitt aufweisen, wobei das Hauptteil beidendseitig durch Wandteile begrenzt wird, die eine kugel-, halbkugel-, bodenförmige oder plattenförmige Ausformung besitzen, und die einen aus Hauptteil und Wandteilen gebildeten Behälterraum sowie Halterungs- und Anschlußeinrichtungen aufweisen, wobei das Hauptteil, die Wandteile und gegebenenfalls auch die Halterungs- und Anschlußeinrichtungen aus faserverstärkten Kunststoffen bestehen.

### Stand der Technik

Es ist bekannt, Bauteile aus glasfaser- oder kohlenstofffaserverstärkten Kunststoffen herzustellen. Derartige Bauteile sind schon für Luft-, Wasser- und Landfahrzeuge hergestellt worden. Diese Bauteile, die als Flächenbauteile oder Tragbauteile ausgebildet sein können, zeichnen sich dadurch aus, daß sie gewichtsgünstig sind, einen konstruktiv einfachen Aufbau aufweisen und sich gut für die Serienherstellung eignen. Es können daher bei der Verwendung derartiger Bau- und Tragteile Fahrzeugkörper mit geringem Baugewicht bei gleichzeitig hoher Belastbarkeit geschaffen werden.

Tank- oder Silobehälter von Fahrzeugen werden aus Knetlegierungen bzw. aus Stahl hergestellt, wobei die Blechstärke der Einzelbauteile immer relativ konstant ist, d. h. es kann keine örtliche Festigkeits- bzw. Belastungsoptimierung erfolgen. Darüber hinaus weisen derartige Behälter ein entsprechendes Eigengewicht auf, das die Nutzlast reduziert.

Aus o. g. Gründen werden Tank- und/oder Silobehälter auch aus glasfaser- oder kohlenstoffaserverstärkten Kunststoffen hergestellt.

Es sind Behälter bekannt, deren Wandteile, Halterungseinrichtungen und Anschlußeinrichtungen aus faserverstärkten Kunststoffen bestehen.

Hierbei werden Elemente, die aus Kunststoff bestehen, der bevorzugterweise mit Glasfasern oder zur Erreichung eines hohen Festigkeitsverhaltens mit Kohlenstoffasern verstärkt ist.

Der Aufbau besteht aus einer inneren Schicht mit eingelagerten Fasern, einer darauf angeordneten Zwischenschicht und einer auf der Zwischenschicht angeordneten äußeren Schicht mit ebenfalls eingelagerten Fasern, wobei die eingelagerten Fasern Glasfasern oder Kohlenstoffasern sein können.

Die verstärkenden Fasern werden in der Regel in zerhackter Form eingesetzt und in Ausnahmefällen werden zur Ausbildung von bestimmten Bauteilen auch ganze Fasern oder Matten eingesetzt, die dann in Relation zum Bauteil orientiert werden.

Es hat sich jedoch herausgestellt, daß derartige faserverstärkte Behältnisse, insbesondere bei thermischen Belastungen zu Defekten neigen.

Aus der den nächstkommenden Stand der Technik bildenden DE-A-2 448 875 ist ein Kasten für Straßen- oder Schienenfahrzeuge bekannt, dessen Wände aus verschiedenen stofflichen Lagen bestehen, wobei ein einheitliches inneres Kant- oder Profilrohr, das mit Verteifungselementen versehen ist und aus einem gewickeltem Laminat durch Wickeltechnik aus Harzfäden hergestellt ist, vorgesehen ist, auf das Verstärkungs- und Isolierstoffe, z.B. Formstücke aus fester Schaumstoffmasse, die ggf. als Waben, Träger oder Rahmen für Öffnungen ausgebildet sein können, aufgetragen werden, wodurch ein Isolier- und Versteifungsraum entsteht, der von dem äußeren Kant- oder Profilrohr überdeckt wird, das wiederum aus kreuzweise gewickeltem mehrmals in einem im Harz getränkten Faden oder Gewebe besteht.

### Aufgabe, Lösung, Vorteile

Es ist daher Aufgabe der Erfindung, einen gattungsgemäßen Tank- oder Silobehälter zu schaffen, der bei gleichem oder geringerem Gewicht gegenüber Behältern gemäß dem Stand der Technik eine höhere Festigkeit, insbesondere bei thermischen Belastungen aufweist.

Diese Aufgabe wird durch die Merkmale des Anspruchs 1 gelöst. Dabei ist erfindungsgemäß vorgesehen, einen gattungsgemäßen Tank- oder Silobehälter zu schaffen, wobei die verstärkenden Fasern mindestens für das Hauptteil in Form eines "endlosen" Fadens spiralförmig gewickelt im Kunststoff eingebettet sind.

Bevorzugterweise sind auch die Wandteile je nach ihrer geometrischen Ausformung spiralförmig mit eingebetteten Fäden umwickelt.

Die Fäden bestehen aus Glasfasern und/oder Kohlefasern, wobei bei einer Mischung beider Fasern das Mischungsverhältnis durch die mechanischen Anforderungen bestimmt wird.

Zudem besteht die Möglichkeit Fäden zu Strängen zusammenzufassen und auch die Wicklung mehrlagig auszuführen, so daß beliebige Wandstärken für jeden Einsatzzweck hergestellt werden können.

Als Kohlenstoffasern werden dabei aus verschiedenen faserbildenden organischen Stoffen wie Zellulose, PAN, PF-Harzen u. dgl. hergestellte Materialien verwendet, wobei diese nicht brennbar und bis ca. 2000 °C wärmebeständig sind.

Als Kunststoff, in den die Fasern eingebettet werden, werden Harze, insbesondere Epoxidharze verwendet. Je nach gewünschter Auslegung sind auch andere Duroplaste und auch Thermoplaste vom Polyolefin-, Polyamid-, Polystyrol- und Polycarbonattyp verwendbar.

Bei Verwendung von Thermoplasten ist es besonders vorteilhaft, daß die für diesen Einsatzbereich negativen Eigenschaften der Thermoplaste bei thermischen Belastungen durch die erfindungsgemäße Faserverstärkung mehr als kompensiert werden, so daß die gute Eignung, z. B. der Polyolefine für den Transport von Lebensmitteln stärker genutzt werden kann.

Von den Epoxidharzen werden die aus Epichlorhydrin und Bisphenol A bevorzugt.

Bevorzugterweise sind auch die Halterungs- und Anschlußteile aus faserverstärktem Kunststoff gefertigt, wobei hier durch die Ausbildung von "organischen" Formen erreicht wird, daß die Glasfaser- bzw. Kohlenstoffäden in erfindungsgemäßer Weise gewickelt in den Baustoff eingearbeitet sind.

Durch die Verwendung eines Computers bei dem auch ansonsten automatischen Wickelverfahren zur Herstellung eines erfindungsgemäßen Behälters, ist die Wicklung problemlos derart auslegbar, daß die Fäden gemäß der Hauptbelastungsrichtung ausgerichtet werden und Zonen mit erhöhter mechanischer Belastung verstärkt umwickelt werden, wobei abrupte Übergänge vermieden werden, so daß keine Spannungsrisse oder Materialermüdungserscheinungen auftreten.

Der Silo- oder Tankbehälter wird in Sandwichbauweise erstellt. Diese weist eine innere Schicht mit eingebetteten Fasern, eine auf der ersten Schicht angeordnete Zwischenschicht zur Dämmung, vorzugsweise aus PUR und eine äußere Schicht auf. Die äußere Schicht kann ebenfalls aus einem faserverstärkten Kunststoff bestehen. Auch die Halterungs- und Anschlußeinrichtungen können sandwichartig aufgebaut sein.

Zur Herstellung eines entsprechenden Behälters wird ein spezielles Verfahren vorgesehen, nach dem vorgesehen ist, daß auf einen formbildenden Modellkörper die innere Schicht derart aufgebracht wird, daß die Wicklung in einem Harz eingebettet ist. Nach der Härtung wird die Isolierung aus vorzugsweise PUR aufgebracht und abschließend mit einer Deckschicht versehen.

Um eine hohe Dauerfestigkeit und Dauerbelastbarkeit zu erreichen, wird erfindungsgemäß noch vorgesehen, daß auf die Deckschicht eine Oberflächenschutzlackierung als Schutzlackierung, insbesondere gegen UV-Strahlung aufgebracht wird.

Die innerste Schicht weist zudem noch eine Profilierung auf, um einen möglichst festen Verbund zu erzielen.

Durch die erfindungsgemäße Verwendung von Kohlefasern, die über die gesamte Behälteroberfläche leitend miteinander verbunden sind, wird vorteilhafter Weise verhindert, daß statische Ladungen aufgebaut werden, was für den Transport von bestimmten Gefahrgütern, wie z. B. unhalogenierten Kohlenwasserstoffen bzw. Benzin wichtig ist. Die elektrische Ladung wird dazu über die Karosserie zur Erde abgeleitet.

Es ergeben sich insgesamt folgende Vorteile durch Verwendung eines erfindungsgemäßen Behälters.
- Es ist möglich, eine freitragende Bauweise ohne ein durchgehendes Chassis vorzusehen.
- Durch die Ausbildung genau nach der Belastung wird eine deutliche Gewichtsersparnis erreicht.
- Durch die Verwendung von Kunststoff in Sandwichbauweise bilden sich keine Wärme- oder Kältebrücken zum Fahrgestell und zu den Anbauteilen.
- Durch die Verwendung von Kunststoff besteht keine Gefahr eines elektrolytischen Spannungsaufbaus (Korrosion von edlen zu unedlen Metallen).
- In der thermisch selbstisolierenden Sandwichbauweise ist eine Behälterinnenreinigung mit üblicherweise Heißwasser/Wasserdampf sowie mit selbsttrocknender Wirkung ohne spätere Kondensatbildung möglich. Dies führt zu einer kostengünstigen Reinigung ohne Fremdtrocknung.
- Der Verbundwerkstoff ist leicht einfärbbar, über Sandwichbauweise innen und außen sogar farblich verschieden.

Weitere vorteilhafte Ausgestaltungen sind in den Unteransprüchen gekennzeichnet.

### Kurze Beschreibung der Zeichnungen

Nachstehend wird die Erfindung anhand von Zeichnungen näher erläutert. Es zeigen:
- Fig. 1: in einer seitlichen Ansicht einen Silosattelauflieger mit erfindungsgemäßem Silobehälter,
- Fig. 2: in einer Rückansicht einen Silosattelauflieger, und
- Fig. 3: in einer geschnittenen Teilansicht einen erfindungsgemäßen Behälter.

### Detaillierte Beschreibung der Erfindung und bester Weg zur Ausführung der Erfindung

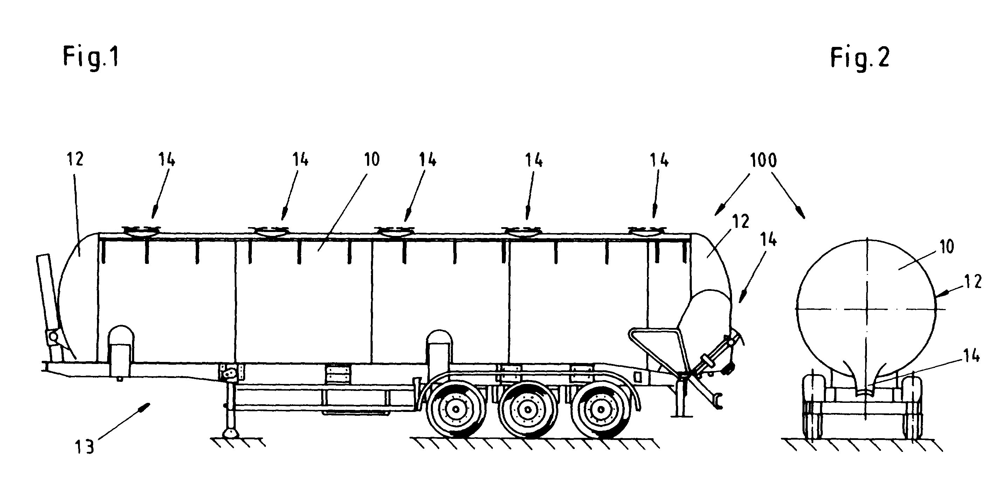

In Fig. 1 und 2 ist ein Silosattelauflieger 100 dargestellt, der einen Tank- bzw. Silobehälter 10 aufweist, dessen Behälterinnenraum 11 für die Aufnahme von Flüssigkeiten oder staub- und granulatförmigen Gütern vorgesehen ist. Der Silobehälter 10 besteht dabei aus geometrischen Grundformen wie Zylinder, Kegel, Kugel, Böden o. dgl., die aus Abwicklungen und Durchdringungen miteinander kombinert sind.

Alle Wandteile 12 und das Hauptteil 12a des Behälters 10 und auch die Halterungseinrichtungen 13 und die Anschlußeinrichtungen 14 bestehen aus faserverstärkten Kunststoffelementen.

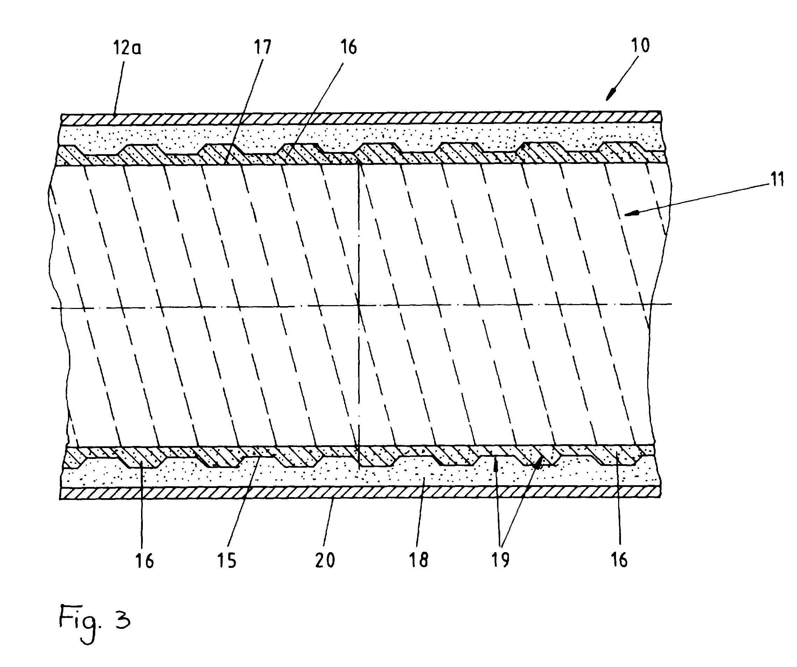

In Fig. 3 ist ein Silobehälter 10 geschnitten dargestellt. Dieser weist einen sandwichartigen Aufbau auf. Zur Ausbildung dieses Aufbaues und zur Herstellung des entsprechenden Behälters wird auf einen in der Zeichnung nicht dargestellten formbildenden Modellkörper eine erste innere Schicht 15 mit gewickelten Fäden 16 aufgebracht. Durch deren Anlage an den glatten Modellkörper wird eine äußerst glatte Innenoberfläche 17 des Behälters 10 erreicht, die insbesondere bei Tank- und Silobehältern notwendig ist. Auf die innere Schicht 15 wird eine Zwischenschicht 18 aufgebracht, die aus Schaumstoff, wie z. B. PUR oder anderen geeigneten Materialien besteht. Die Dicke zwischen der Schicht 18 kann dabei je nach konstruktiver Notwendigkeit dick oder dünn sein, wobei die Zwischenschicht 18, das Widerstandsmoment des Bauteiles wesentlich erhöht, aber auch zur Verfüllung von Toträumen dient. Die innere Schicht 15 ist mit einem umlaufenden Profil 19 versehen, das einen festen Verbund der Schichten 15, 18 bewirkt und gleichzeitig als Verstärkungsrippe dient. Das Profil 19 kann durch eine Häufung von Fäden 16 ausgebildet sein.

Auf der Zwischenschicht 18 zur Isolierung ist eine äußere Schicht 20 zur Abdeckung vorgesehen, die mit einer Lackierung o. dgl. versehen sein kann.

Die Ausbildung der einzelnen Elemente des Silobehälters 10 ist voranstehend lediglich beispielhaft dargestellt. Der sandwichartige Aufbau kann durch Anordnung mehrerer faserverstärkter Kunststoffschichten sowie durch Anordnung mehrerer Zwischenschichten ergänzt werden, um die entsprechende Relation zwischen der gewünschten Dicke und der gewünschten Tragfähigkeit des entsprechenden Bauteiles zu erreichen. Weiterhin kann vorgesehen sein, daß in die Kunststoffschichten und/oder in die Zwischenschichten Gurte oder Tragelemente zur speziellen Verstärkung der Tragfähigkeit eingebracht werden. Weiterhin ist vorgesehen, daß in der Zwischenschicht zum Innentank hin Elemente eingebaut/eingelegt werden können, die flüssige Wärmeträger für Heizzwecke aufnehmen können, sowie aber auch Heizmatten oder Heizwicklungen mit elektrischer Energie.

### Bezugszeichenliste:

- Silosattelauflieger: 100
- Silobehälter: 10
- Behälterinnenraum: 11
- Wandteile: 12
- Hauptteil: 12a
- Halterungseinrichtungen: 13
- Anschlußeinrichtungen: 14
- erste innere Schicht: 15
- Fäden: 16
- Innenoberfläche: 17
- Zwischenschicht: 18
- Profil: 19
- äußere Schicht: 20

## Patentansprüche

1. Tank- oder Silobehälter (10), insbesondere für Fahrzeuge zur Aufnahme von flüssigen oder fließfähigen Gütern, dessen langstrecktes Hauptteil (12a) einen im wesentlichen kreis- oder ellipsenförmigen Querschnitt aufweist, wobei das Hauptteil beidendsei ig durch Wandteile (12) begrenzt wird, die eine kegel-, halbkugel-, bodenförmige oder plattenförmige Ausformung besitzen, und der einen aus dem Haupteil (12a) und den Wandteilen (12) gebildeten Behälterinnenraum (11) sowie Haltungs- (13) und Anschlußeinrichtungen (14) aufweist, wobei das Hauptteil (12a), die Wandteile (12) und gegebenenfalls auch die Halterungs- (13) und Anschlußeinrichtungen aus faserverstärkten Kunststoffen bestehen,
dadurch gekennzeichnet
daß die verstärkenden Fasern für das Hauptteil (12a) in Form von Fäden (16) oder Garnen spiralförmig endlos gewickelt und in den Kunststoff eingebettet sind, wobei der Kunststoff ein Thermoplast ist, das von Polyolefin- oder Polyamidtyp ist, daß die Wandung des Behälters (10) sandwichartig aufgebaut ist, wobei eine erste innere Schicht (15) aus faserverstärktem Kunststoff, eine zweite Schicht bzw. Zwischenschicht (18) aus einem isolierenden Material, aus einem Schaumstoff, und eine dritte Schicht, die äußere Schicht (20), die mit einer Lackierung versehen ist und die zur Abdeckung vorgesehen ist, vorgesehen sind, daß die innere Schicht (15) auf der der Zwischenschicht (18) zugewandten Seite ein Profil aufweist, das durch den verstärkten Kunststoff ausgeformt ist, daß das Profil (19) im wesentlichen durch eine verstärkte Wickelung von Fäden (16) ausgebildet ist, daß das Profil (19) aus zumindest am Hauptteil (12a) des Behälters (10) umlaufenden Rippen besteht und daß die Fäden (15) Kohlefasern sind, die miteinander leitend verbunden sind, damit eine elektrische Ladung über die Karosserie ableitbar ist.

2. Tank- oder Silobehälter nach Anspruch 1,
dadurch gekenzeichnet,
daß die verstärkten Fasern Glasfasern und/oder Kohlefasern sind.

3. Tank- oder Silobehälter nach Anspruch 1 oder 2,
dadurch gekennzeichnet,
daß mehrere Fäden zu einem Strang zusammengefaßt sind.

4. Tank- oder Silobehälter nach Ansprüchen 2 oder 3,
dadurch gekennzeichnet,
daß die Kohlefasern elektrisch leitend mit der metallischen Fahrzeugkarosserie verbunden sind.

5. Tank- oder Silobehälter nach einem der Ansprüche 1 bis 4,
dadruch gekennzeichnet,
daß der verstärkte Kunststoff ein Duroplast ist.

6. Tank- und Silobehälter nach Anspruch 5,
dadurch gekennzeichnet,
daß das Duroplast ein Epoxidharz ist.

7. Tank- oder Silobehälter nach Anspruch 1,
dadurch gekennzeichnet,
daß der Schaumstoff ein Polyurethanschaumstoff ist.

8. Tank oder Silobehälter nach einem der Ansprüche 1 bis 7,
dadurch gekennzeichnet,
daß an stark belasteten Flächen oder Punkten des Behälters (10) mittels vermehrt aufgebrachten Wicklungen Materialhäufungen vorgesehen sind.

9. Tank- oder Silobehälter nach einem der Ansprüche 1 bis 8,
dadurch gekennzeichnet,
daß die Schicht (20) aus einem faserverstärktem Kunststoff mit einer Häufung von Fäden (16) besteht.

10. Tank- oder Silobehälter nach einem der Ansprüche 1 bis 9,
dadurch gekennzeichnet,
daß die äußere Schicht (20) aus einem unverstärkten Kunststoff besteht.

11. Tank- oder Solibehälter nach einem der Ansprüche 1 bis 10,
dadurch gekennzeichnet,
daß unter der äußeren Schicht (20) mehrere Schichten von faserverstärktem Kunststoff und Schaumstoff alternierend ausgebildet sind.

12. Tank- oder Silobehälter nach einem der Ansprüche 1 bis 11,
dadurch gekennzeichnet,
daß der Behälter (10) lackiert ist.

13. Tank- oder Silobehälter nach Anspruch 12,
dadurch gekennzeichnet,
daß die Lackierung für UV-Strahlen undurchlässig ist.

14. Tank- oder Silobehälter nach einem der Ansprüche 1 bis 13,
dadurch gekennzeichnet,
daß die Halterungs- (13) und Anschlußeinrichtungen (14) durch gewickelte Fäden (16) aus Glas- und/oder Kohlefasern verstärkt sind.

## Claims

1. A tank or silo container (10), in particular for vehicles for containing liquid or free-flowing goods, the long stretched-out main part (12a) of which shows a substantially circular or elliptic cross section, the main part being limited on both ends by wall parts (12) which have a conical, a hemispherical, a bottom-shaped or plate-shaped shaping, and which has a container inner space (11), constituted by the main part (12a) and the wall parts (2), as well as holding (13) and connecting devices (14), the main part (12a), the wall parts (12) and eventually also the holding (13) and connecting devices consisting of fiber reinforced plastics,
characterized in
that the reinforcing fibers for the main part (12a) are endless spirally rolled in form of threads (16) or yarns and are embedded into the plastic, the plastic being a thermoplastic which is of polyolefine or polyamide type, that the wall of the container (10) has a sandwich structure, a first inner layer (15) being made of fiber reinforced plastic, a second layer or an intermediate layer (18) of an insulating material, of a foam and a third layer, the outer layer (20), which is provided with a coat of lacquer and which is provided for covering, being provided, that the inner layer (15) shows on the side turned to the intermediate layer (18) a profile which is shaped by the reinforced plastic, that the profile (19) is substantially constituted by a reinforced winding of threads (16), that the profile (19) consists of continuous ribs at least on the main part (12a) of the container (10) and that the threads (15) are carbon fibers which are electrically connected with each other so that an electric charge can be derivated over the car body.

2. A tank or silo container according to claim 1,
characterized in
that the reinforced fibers are glass fibers and/or carbon fibers.

3. A tank or silo container according to claim 1 or 2,
characterized in
that several threads are combined to a rope.

4. A tank or silo container according to the claims 2 or 3,
characterized in
that the carbon fibers are electrically connected with the metallic car body of the vehicle.

5. A tank or silo container according to one of the claims 1 to 4,
characterized in
that the reinforced plastic is a duroplastic.

6. A tank or silo container according to claim 5,
characterized in
that the duroplastic is an epoxy resin.

7. A tank or silo container according to claim 1,
characterized in
that the foam is a polyurethane foam.

8. A tank or silo container according to one of the claims 1 to 7,
characterized in
that accumulations of material are provided at strongly loaded surfaces or points of the container (10) by means of windings applied in bigger quantities.

9. A tank or silo container according to one of the claims 1 to 8,
characterized in
that the layer (20) consists of a fiber reinforced plastic with an accumulation of threads (16).

10. A tank or silo container according to one of the claims 1 to 9,
characterized in
that the outer layer (20) consists of an unreinforced plastic.

11. A tank or silo container according to one of the claims 1 to 10,
characterized in
that several layers of fiber reinforced plastic and foam are configured alternately under the outer layer (20).

12. A tank or silo container according to one of the claims 1 to 11,
characterized in
that the container (10) is lacquered.

13. A tank or silo container according to claim 12,
characterized in
that the coat of lacquer is impermeable for UV rays.

14. A tank or silo container according to any of the claims 1 to 13,
characterized in
that the holding (13) and connecting devices (14) are reinforced by wound threads (16) of glass and/or carbon fibers.

## Revendications

1. Réservoir ou silo (10), en particulier pour véhicules pour contenir des marchandises liquides ou coulantes, dont la partie principale allongée (12a) présente une section essentiellement circulaire ou elliptique, la partie principale étant délimitée aux deux extrémités par des parties de paroi (12) qui possèdent une configuration conique, hémisphérique, en forme de fond ou de plaque, et qui présente un espace intérieur de réservoir (11), formé par la partie principale (12a) et les parties de paroi (12), ainsi que des dispositifs de fixation et de raccord (14), la partie principale (12a), les parties de paroi (12) et éventuellement aussi les dispositifs de fixation (13) et de raccord étant constituées par des plastiques renforcés par fibres,
caractérisé en ce
que les fibres de renforcement pour la partie principale (12a) sont enroulées en forme de spirale sans fin en forme de fils (16) ou de fils tordus et sont encastrées dans le plastique, le plastique étant une matière thermoplastique qui est du type polyoléfine ou polyamide, que la paroi du réservoir (10) a une structure de type sandwich, une première couche intérieure (15) étant en plastique renforcé par des fibres, une seconde couche ou couche intermédiaire (18) étant en matériau isolant, en une mousse et une troisième couche, qui est pourvue d'une couche de laque et qui est prévue pour recouvrir, étant prévues, que la couche intérieure (15) présente un profil sur le côté tourné vers la couche intermédiaire (18) qui est formé par le plastique renforcé, que le profil (19) est configuré essentiellement par un enroulement renforcé de fils (16), que le profil (19) consiste en nervures continues tout au moins sur la partie principale (12a) du réservoir (10) et que les fils (15) sont des fibres de carbone qui sont en connexion conductrice les uns avec les autres pour qu'une charge électrique puisse être dérivée sur la carrosserie.

2. Réservoir ou silo selon la revendication 1,
caractérisé en ce
que les fibres qui renforcent sont des fibres de verre et/ou de carbone.

3. Réservoir ou silo selon la revendication 1 ou 2,
caractérisé en ce
que plusieurs fils sont réunis en écheveau.

4. Réservoir ou silo selon les revendications 2 ou 3,
caractérisé en ce
que les fibres de carbone sont en connexion électrique avec la carrosserie métallique du véhicule.

5. Réservoir ou silo selon l'une des revendications 1 à 4,
caractérisé en ce
que le plastique renforcé est une résine thermodurcissable.

6. Réservoir ou silo selon la revendication 5,
caractérisé en ce
que la résine thermodurcissable est une résine époxy.

7. Réservoir ou silo selon la revendication 1,
caractérisé en ce
que la mousse est une mousse de polyuréthane.

8. Réservoir ou silo selon l'une des revendications 1 à 7,
caractérisé en ce
que des accumulations de matière sont prévues sur les surfaces ou aux points fortement chargés du réservoir (10) au moyen d'enroulements appliqués en plus grandes quantités.

9. Réservoir ou silo selon l'une des revendications 1 à 8,
caractérisé en ce
que la couche (20) consiste en un plastique renforcé par fibres avec une accumulation de fibres (16).

10. Réservoir ou silo selon l'une des revendications 1 à 9,
caractérisé en ce
que la couche extérieure (20) est en un plastique non renforcé.

11. Réservoir ou silo selon l'une des revendications 1 à 10,
caractérisé en ce
que plusieurs couches de plastique renforcé par fibres et de mousse sont configurées en alternance sous la couche extérieure (20).

12. Réservoir ou silo selon l'une des revendications 1 à 11,
caractérisé en ce
que le réservoir (10) est laqué.

13. Réservoir ou silo selon la revendication 12,
caractérisé en ce
que la couche de laque est imperméable aux rayons ultraviolets.

14. Réservoir ou silo selon l'une des revendications 1 à 13,
caractérisé en ce
que les dispositifs de fixation (13) et de raccord (14) sont renforcés par des fils enroulés (16) en fibres de verre et/ou de carbone.
